(19) Europäisches Patentamt
European Patent Office
Office européen des brevets

(11) **EP 3 610 423 B1**

(12) **EUROPEAN PATENT SPECIFICATION**

(45) Date of publication and mention of the grant of the patent:
**21.08.2024 Bulletin 2024/34**

(21) Application number: **18726787.7**

(22) Date of filing: **22.05.2018**

(51) International Patent Classification (IPC):
**G06N 3/092** (2023.01) **G06N 3/084** (2023.01)
**G06N 3/045** (2023.01)

(52) Cooperative Patent Classification (CPC):
**G06N 3/045; G06N 3/084; G06N 3/092**

(86) International application number:
**PCT/EP2018/063306**

(87) International publication number:
**WO 2018/211146 (22.11.2018 Gazette 2018/47)**

(54) **PROGRAMMABLE REINFORCEMENT LEARNING SYSTEMS**

PROGRAMMIERBARE VERSTÄRKUNGSLERNSYSTEME

SYSTÈMES D'APPRENTISSAGE DE RENFORCEMENT PROGRAMMABLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.05.2017 US 201762509020 P**

(43) Date of publication of application:
**19.02.2020 Bulletin 2020/08**

(73) Proprietor: **Deepmind Technologies Limited**
**London N1C 4AG (GB)**

(72) Inventors:
 • **DENIL, Misha Man**
 **London N1C 4AG (GB)**
 • **COLMENAREJO, Sergio Gomez**
 **London N1C 4AG (GB)**
 • **CABI, Serkan**
 **London N1C 4AG (GB)**
 • **SAXTON, David William**
 **London N1C 4AG (GB)**
 • **FREITAS, Joao Ferdinando**
 **London N1C 4AG (GB)**

(74) Representative: **Marks & Clerk GST**
**1 New York Street**
**Manchester M1 4HD (GB)**

 • **BATTAGLIA PETER W ET AL: "Interaction Networks for Learning about Objects, Relations and Physics", 1 December 2016 (2016-12-01), XP055851025, Retrieved from the Internet <URL:https://arxiv.org/pdf/1612.00222.pdf> [retrieved on 20211013]**
 • **HAONAN YU ET AL: "A Deep Compositional Framework for Human-like Language Acquisition in Virtual Environment", 13 April 2017 (2017-04-13), XP055503262, Retrieved from the Internet <URL:https://arxiv.org/pdf/1703.09831v2.pdf> [retrieved on 20180829]**
 • **MISHA DENIL ET AL: "Programmable Agents", ARXIV.ORG, CORNELL UNIVERSITY LIBRARY, 201 OLIN LIBRARY CORNELL UNIVERSITY ITHACA, NY 14853, 20 June 2017 (2017-06-20), XP080771214**
 • **XIAODAN LIANG ET AL: "Deep Variation-structured Reinforcement Learning for Visual Relationship and Attribute Detection", ARXIV.ORG, CORNELL UNIVERSITY LIBRARY, 201 OLIN LIBRARY CORNELL UNIVERSITY ITHACA, NY 14853, 8 March 2017 (2017-03-08), XP080755361, DOI: 10.1109/CVPR.2017.469**
 • **JACOB DEVLIN ET AL: "RobustFill: Neural Program Learning under Noisy I/O", ARXIV.ORG, CORNELL UNIVERSITY LIBRARY, 201 OLIN LIBRARY CORNELL UNIVERSITY ITHACA, NY 14853, 22 March 2017 (2017-03-22), XP080758752**

(56) References cited:
**US-A1- 2016 096 270 US-B1- 9 373 057**

**Description**

BACKGROUND

This specification relates to programmable reinforcement learning agents for, in particular, executing tasks expressed in formal language.

In a reinforcement learning system, an agent interacts with an environment by performing actions that are selected by the reinforcement learning system in response to receiving observations that characterize the current state of the environment.

Some reinforcement learning systems select the action to be performed by the agent in response to receiving a given observation in accordance with an output of a neural network.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters. Haonan Yu et al, "A Deep Compositional Framework for Human-like Language Acquisition in Virtual Environment", arXiv: 1703.09831, 13-04-2017, describes a task where an agent learns to navigate in a 2D maze-like environment based on natural language commands. Battaglia, Peter W. et al, "Interaction Networks for Learning about Objects, Relations and Physics", arXiv: 161200222, 01-12-2016, introduces interaction networks as a flexible and efficient model for explicit reasoning about objects and relations in complex systems.

SUMMARY

This specification describes a system implemented as one or more computer programs on one or more computers in one or more locations. The system is as defined by claim 1. A corresponding method is defined by claim 15.

Each weight of the plurality of weights may be associated with first and second objects represented within the environment. Each weight of the plurality of weights may be generated based upon a relationship between respective first and second objects as represented within the environment. The weights may mediate messages between objects. The system may further comprise: a first linear layer arranged to process data representing a first object within the environment to generate first linear layer output; and a second linear layer arranged to process data representing a second object within the environment to generate second linear layer output. Each weight of the plurality of weights may be generated based upon output of the first linear layer output and output of the second linear layer output. Each weight may be based upon a difference between a relationship between a first object and a second object and the first object and a plurality of further objects. Each relationship may be weighted based upon the relevance data item. The plurality of weights may be generated based upon a neighborhood attention operation.

The system may further comprise: a message multi-layer perceptron. The message multi-layer perceptron may be arranged to: receive data representing first and second objects within the environment; and generate output data representing a relationship between the first and second objects. The modified data may be generated based upon the output data representing a relationship between the first and second objects. Generating modified data representing a plurality of objects within the environment based upon the plurality of weights may comprise: applying respective weights of the plurality of weights to the output data representing a relationship between the first and second objects. The respective weights may be generated based upon the first and second objects as described above.

The system may further comprise: a transformation multi-layer perceptron. The transformation multi-layer perceptron may be arranged to: receive data representing a first object within the environment; and generate output data representing the first object within the environment. The modified data may be generated based upon the output data representing the first object within the environment.

The output of the plurality of property detector neural networks may indicate a relationship between each object of a plurality of objects within the environment and each property of a plurality of properties. The output of the plurality of property detector neural networks may indicate, for each object of the plurality of objects within the environment and each respective property of the plurality of properties, a likelihood that the object has the respective property. The instruction associated with a task may comprise a goal indicating a target relationship between at least two objects of the plurality of objects. The instruction associated with a task may indicate a property associated with at least one object of the at least two objects. The instruction associated with a task may indicate a property not associated with at least one object of the at least two objects. The instruction associated with a task may comprise an instruction defined in a declarative language. The instruction associated with a task may comprise a goal indicating a target relationship between at least two objects of the plurality of objects and may define at least one of the two objects in terms of its properties.

The property data associated with a property of the object may comprise (that is, specify) at least one property selected from the group consisting of: an orientation; a position; a color; a shape. The plurality of objects may comprise at least one object associated with performing the action associated with the task. The at least one object associated with performing the action associated with the task may comprise a robotic arm. The at least one property may comprise at least one joint position of the robotic arm.

At least one neural network of the system may comprise a deep neural network. At least one neural network of the system may be trained using deterministic policy gradient training. The system may receive input observations that may be the basis for the property data. The observations may take the form of a matrix. Each row or column of the matrix may comprise data associated with an object in the environment. The observation may define a position in three dimensions and an orientation in four dimensions. The observation may be defined in terms of a coordinate frame of a robotic arm. One or more properties of the object may be defined by 1-shot vectors. The observations may form the basis for the data representing an object within an environment received by the property detector neural networks. The observations may comprise data indicating a relationship between an arm position of a robotic hand and each object in the environment.

According to an aspect there is provided a method for determining an action based on a task, the method comprising: receiving data representing an object within an environment; processing the data representing an object within the environment using a plurality of neural networks to generate data associated with a property of the object; receiving an instruction indicating a task associated with an object and a property; processing the output of the plurality of property detector neural networks based upon the instruction to generate a relevance data item, the relevance data item indicating objects within the environment associated with the task; generating a plurality of weights based upon the relevance data item; and generating modified data representing an object within the environment based upon the plurality of weights; and generating an action, wherein the action is generated by a neural network arranged to receive modified data representing a plurality of objects within the environment.

In some implementations a system/method as described above may be implemented as a reinforcement learning system/method. This may involve inputting a plurality of observations characterizing states of an environment. The observations may comprise data explicitly or implicitly characterizing a plurality of objects in the environment, for example object location and/or orientation and/or shape, color or other object characteristics. These are referred to as object features. The object features may be provided explicitly to the system or derived from observations of the environment, for example from an image sensor followed by a convolutional neural network. The environment is real. An agent, for example a robot or other mechanical agent, interacts with the environment to accomplish a task, later also referred to as a goal. The agent receives a reward resulting from the environment being in a state, for example a goal state, and this is provided to the system/method. A goal for the system may be defined by a statement in a formal language; the formal language may identify objects of the plurality of objects and define a target relationship between them, for example that one is to be near one another (i.e. within a defined distance of one another). Other physical and/or spatial relationships may be defined for the objects, for example, under, over, attached to, and in general any target involving a defined relationship between the two objects.

The reinforcement learning system/method may store the observations as a matrix of features (later $\Omega$) in which columns correspond to objects and rows to the object features or vice-versa (throughout this specification the designations of rows and columns may be exchanged). The matrix of features is used to determine a relevant objects vector (later $p$) defining which objects are relevant for the defined goal. The relevant objects vector may have a value for each object defining the relevance of the object to the goal. The matrix of features is also processed, in conjunction with the relevant objects vector, for example using a message passing neural network, to determine an updated matrix ($\Omega'$) representing a set of interactions between the objects. The updated matrix is then used to select an action to be performed by the agent with the aim of accomplishing the goal.

The aforementioned relevance data item may comprise the relevant objects vector. The relevant objects vector may be determined from a mapping between objects and their properties, for example represented by an object property matrix (later $\Phi$). Entries in this matrix may comprise the previously described property data for the objects, which may comprise soft (continuous) values such as likelihood data. As previously described, the property data may be determined from the matrix object features using property detector neural networks. A property detector neural network may be provided for each property, and may applied to the set of features for each object (column of S2) to determine a value for the property for each object, disentangling this from the set of object features. The relevant objects vector for a goal may be determined from the objects identified by the statement of the goal in the formal language, by performing soft set operations defined by the statement of the goal on the object property matrix.

As described previously the updated matrix ($\Omega'$) comprises modified data representing the plurality of objects, and the message passing neural network may comprise a message multi-layer perceptron (later $r$). The message passing neural network may determine a message or value passed from a first object to a second object, as previously described, comprising data representing a relationship between the first and second objects. As previously described the message may be weighted by a weight (later $\alpha_{ij}$) which is dependent upon features of the first and second objects. For example a weight may be a non-linear function of a combination of respective linear functions of the features of each object ($c$, $q$). The weight may also be dependent upon the relevance data item (relevant objects vector) so that messages are weighted according to the relevance of the objects to the goal. In the updated matrix a set or column of features for an object may be determined by summing the messages between that object and each of the other objects weighted according to the weights. The same message passing neural network may be used to determine the message passed between each pair of objects, dependent upon the features of the objects. In the updated matrix a set or column of features for an object may also include a contribution from a local transformation function (later $f$), for example implemented by a transformation multi-layer perceptron, which operates to transform the features of the object. The same local transformation function may be used for each object.

A signal for selecting an action may be derived from the modified data representing the plurality of objects, more particularly from the updated matrix ($\Omega'$). This signal may be produced by a function aggregating the data in the updated matrix. For example an output vector (later $h$) summarizing the updated matrix may be derived from a weighted sum over the columns of this matrix, i.e. a weighted sum over the objects. The weight for each column (object) may be determined by the relevance data item (relevant objects vector).

An action may be selected using the output vector. For example in a continuous-control system having a deterministic policy gradient the action may be selected by processing the output vector using a network comprising a linear layer followed by a non-linearity to bound the actions. A Q-value for a critic in such a system may be determined from the output vector of a second network of the type described above, in combination with data representing the selected action.

In order to select the action any reinforcement learning technique may be employed; it is not necessary to use a deterministic policy gradient method. Thus in other implementations the action may be selected by sampling from a distribution. In general, reinforcement learning techniques which may be employed include on-policy methods such as actor-critic methods and off-policy methods such as Q-learning methods. In some implementations an action $a$ may be selected by maximizing an expected reward $Q$. An action-value function $Q$ may be learned by a $Q$-network; a policy network may select $a$. Each network may determine a different respective updated matrix ($\Omega'$) or this may be shared. A learning method appropriate to the reinforcement learning technique is employed, back-propagating gradients through the message passing neural network(s) and property detector neural networks.

The data representing an object within an environment may comprise data explicitly defining characteristics of the object or the system may be configured to process video data to identify and determine characteristics of objects in the environment. In this case the video data may be any time sequence of 2D or 3D data frames. In embodiments the data frames may encode spatial position in two or three dimensions; for example the frames may comprise image frames where an image frame may represent an image of a real scene. More generally an image frame may define a 2D or 3D map of entity locations; the entities may be real and at any scale.

The environment is a real-world environment and the agent is a mechanical agent, interacting with the real-world environment to perform a task. For example the agent may be a robot interacting with the environment to accomplish a specific task or an autonomous or semi-autonomous vehicle navigating through the environment. In these implementations, the actions may be control inputs to control the agent, for example the robot or autonomous vehicle.

The reinforcement learning systems described may be applied to facilitate robots in the performance of flexible, for example user-specified, tasks. The example task described later relates to reaching, and the training is based on a reward dependent upon a part of the robot being near an object. However, the described techniques may be used with any type of task and with multiple different types of task, in which case the task may be specified by a command to the system defining the task to be performed i.e. goal to be achieved. In some implementations of the system the task is specified as a goal which may be defined by one or more statements in a formal goal-definition language. The definition of a goal may comprise statement identifying one or more objects and optionally one or more relationships to be achieved between the objects. One or more of the objects may be identified by a property or lack thereof, or by one or more logical operations applied to properties of an object.

The subject matter described in this specification can be implemented in particular implementations so as to realize one or more of the following advantages. The subject matter described may allow agents to be built that can execute declarative programs expressed in a simple formal language. The agents learn to ground the terms of the language in their environment through experience. The learned groundings are disentangled and compositional; at test time the agents can be asked to perform tasks that involve novel combinations of properties and they will do so successfully. A reinforcement learning agent may learn to execute instructions expressed in simple formal language. The agents may learn to distinguish distinct properties of an environment. This may be achieved by disentangling properties from features of objects identified in the environment. The agents may learn how instructions refer to individual properties and completely novel properties can be identified.

This enables the agents to perform tasks which involve novel combinations of known and previously unknown properties and to generalize to a wide variety of zero-shot tasks. Thus in some implementations the agents may be able to perform new tasks without having been specifically trained on those tasks. This saves time as well as memory and computational resources which would otherwise be needed for training. In implementations the agents, which have programmable task goals, are able to perform a range of tasks in a way which other non-programmable systems cannot, and may thus also exhibit greater flexibility. The agents may nonetheless be trained on new tasks, in which case they are robust against catastrophic forgetting so that after training on a new tasks they are still able to perform a previously learned task. Thus one agent may perform multiple different tasks rather than requiring multiple different agents, thus again saving processing and memory resources.

The agents are implemented as deep neural networks, and trained end to end with reinforcement learning. The agents learn how programs refer to properties of objects and how properties are assigned to objects in the world entirely through their experience interacting with their environment. Properties may be identified positively, or by the absence of a property, and may relate to both physical (i.e. intrinsic) and orientation aspects of an object. Natural and interpretable assignments of properties to objects emerge without any direct supervision of how these properties should be assigned.

The invention is defined in the appended independent claims 1 and 15. Preferred embodiments of the invention are set out in the appended dependent claims. The details of one or more embodiments of the subject matter of this specification are set forth in the accompanying drawings and the description below.

BRIEF DESCRIPTION OF THE DRAWINGS

Figure 1a is a perspective view of a device performing a task according to an implementation;
Figure 1b is a perspective view of a device performing a task according to an implementation;
Figure 1c is a perspective view of a device performing a task according to an implementation;
Figure 1d is a perspective view of a device performing a task according to an implementation;
Figure 2 is a diagram illustrating the relationship between properties and objects according to an implementation;
Figure 3 is a matrix diagram illustrating a $2 \times 2$ matrix;
Figure 4 is another matrix diagram illustrating a $2 \times 2$ matrix;
Figure 5 is a matrix diagram illustrating a $3 \times 3$ matrix;
Figure 6 is a diagram illustrating relevant objects vectors;
Figure 7 is a diagram illustrating how a program is applied according to an implementation;
Figure 8 is a diagram illustrating a relationship between a matrix of features and a matrix of properties;
Figure 9 is a diagram illustrating a process of populating a matrix;
Figure 10 is a diagram illustrating an actor critic method according to an implementation;
Figure 11 is a flowchart chart illustrating the steps of a method according to an implementation;
Figure 12 is a schematic diagram of a system according to an implementation;
Figure 13 is a schematic diagram of a system according to another implementation;
Figure 14a is a perspective view of a device performing a task according to an implementation; and
Figure 14b is a perspective view of a device performing a task according to another implementation.

DETAILED DESCRIPTION

The present specification describes a neural network which can enable a device such as a robot to implement a simple declarative task. Paradigmatic examples of declarative languages are PROLOG and SQL. The declarative paradigm provides a flexible way to describe tasks for agents.

The general framework is as follows: A *goal* is specified as a state of the world that satisfies a relation between two *objects.* Objects are associated with sets of *properties.* In an implementation, these properties are the color and shape of the object. However, the person skilled in the art will appreciate that other properties, such as orientation may be included.

The *vocabulary* of properties gives rise to a system of base sets which are the sets of objects that share each named property (e.g. RED is the set of red objects, etc). The full universe of discourse is then the Boolean algebra generated by these base sets. Two things are required for each program. The *verifier* has access to the true state of the environment, and can inspect this state to determine if it satisfies the program.

A *search procedure* is also required. The search procedure inspects the program as well as some summary of the environment state and decides how to modify the environment to bring the program closer to satisfaction.

These components correspond directly to components of the standard reinforcement learning, RL, setup. Notably, the verifier is a reward function (which has access to privileged information about the environment state) and the search procedure is an agent (which may have a more restrictive observation space). There are several advantages to this approach. The first is that building semantic tasks becomes straightforward. There is only a requirement to specify a new program to obtain a new reward function that depends on semantic properties of objects in the environment. Consequently, combinatorial tasks can be easily specified.

Another advantage is that this framing places the emphasis on generalization to new tasks. A program interpreter is not very useful if all required programs must be enumerated prior to operation. An aim of the present disclosure is not only to perform combinatorial tasks, but to be able to specify new behaviors at test time, and for them to be accomplished successfully without additional training. This type of generalization is quite difficult to achieve with deep RL.

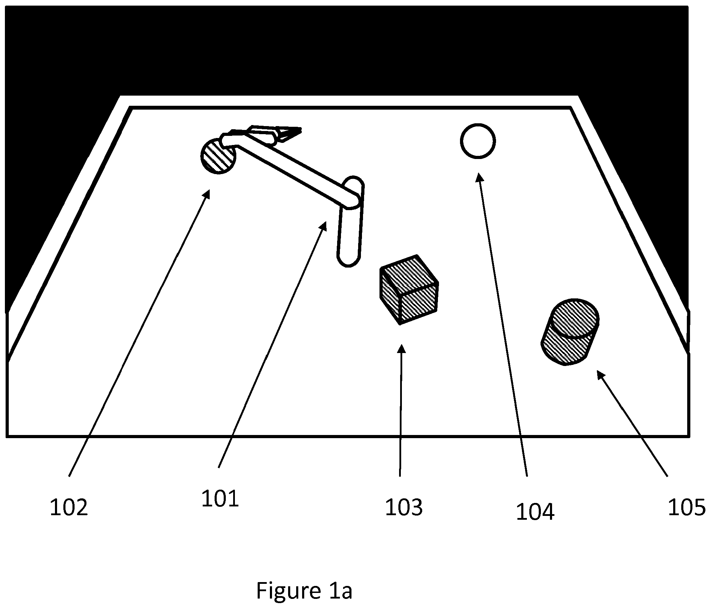

In an implementation of the disclosure, methods are illustrated based on the use of a robotic arm. This system, illustrated in Figures 1a to 1d enables the demonstration of the techniques of the disclosure. However, it is exemplary only and not limiting the scope of the disclosure. It will be appreciated by the person skilled in the art that the methods and systems described herein are applicable to a wide variety of robotic systems and other scenarios. The methods are applicable in any scenario in which the identification of properties of objects from entangled properties in an environment is required.

In an implementation, the demonstration system is a programmable reaching environment based on a device such as a robotic arm. Hereafter the device will be referred to as a robot or robotic arm or hand, but it would be understood by the skilled person that this means any similar or equivalent device.

Figures 1a to 1d are perspective views illustrating several visualizations of the programmable reaching environment according to an implementation. The environment comprises a mechanical arm 101 in the center of a large table. In an implementation, the arm is a simplified version of the Jaco arm, where the body has been stereotyped to basic geoms (rigid body building components), and the finger actuators have been disabled. In each episode a fixed number of blocks appear at random locations on the table. Each block has both a shape and a color, and the combination of both are guaranteed to uniquely identify each block within the episode. The programmable reaching environment is implemented with the MuJoCo physics engine, and hence the objects are subject to friction, contact forces, gravity, etc.

Each task in the reaching environment may be to put the "hand" of the arm (the large white geom) near the target block, which changes in each episode. The task can be communicated to the agent with two integers specifying the target color and shape, respectively.

The complexity of the environment can be varied by changing the number, colors and shapes that blocks can take. Described herein are 2x2 (two colors and two shapes) and 3x3 variants. The number of blocks that appear on the table can also be controlled in each episode, and can, for example, be fixed to four blocks during training to study generalization to other numbers. When there are more possible blocks than are allowed on the table, the episode generator ensures that the reaching task is always achievable (i.e. the agent is never asked to reach for a block that is not present).

The arm may have 6 actuated rotating joints, which results in 6 continuous actions in the range [0; 1]. The observable features of the arm are the positions of the 6 joints, along with their angular velocities. The joint positions can be represented as the sin and cos of the angle of the joint in joint coordinates. This results in a total of 18 ($6 \times 2 + 6$) body features describing the state of the arm.

Objects can be represented using their 3d position as well as a 4d quaternion representing their orientation, both represented in the coordinate frame of the hand. Each block also has a 1-hot encoding of its shape (4d) and its color (5d), for a total of 16 object features per block. Object features for all of the blocks on the table as well as the hand can be provided. Object features for the other bodies that compose the arm do not have to be provided.

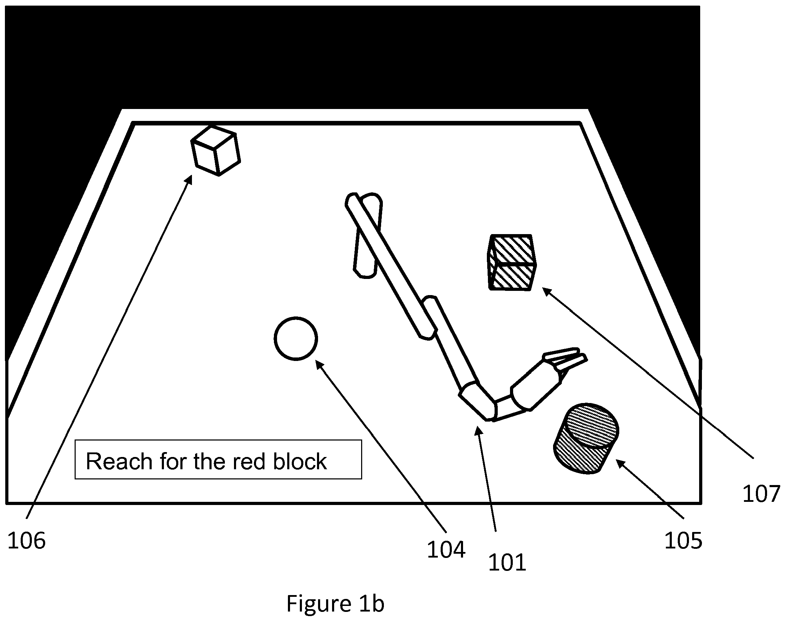

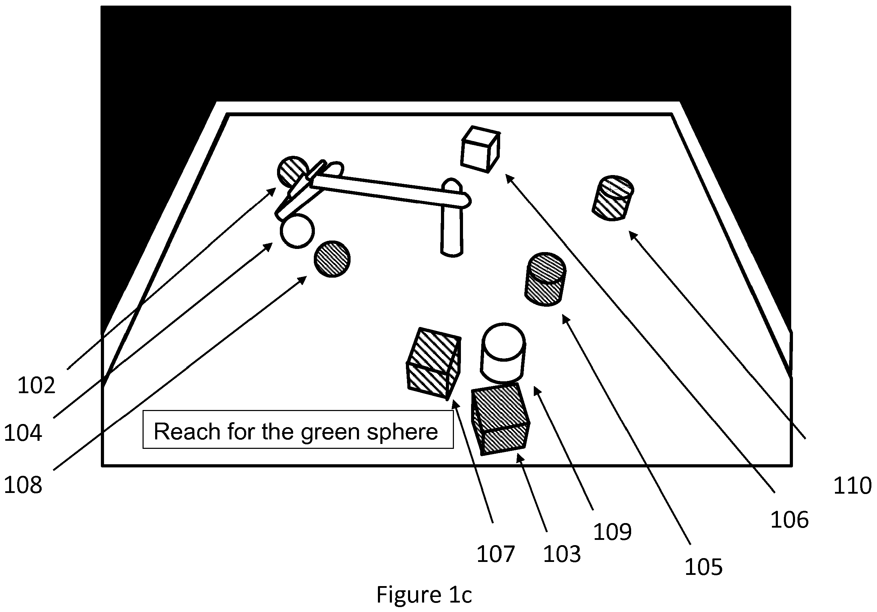

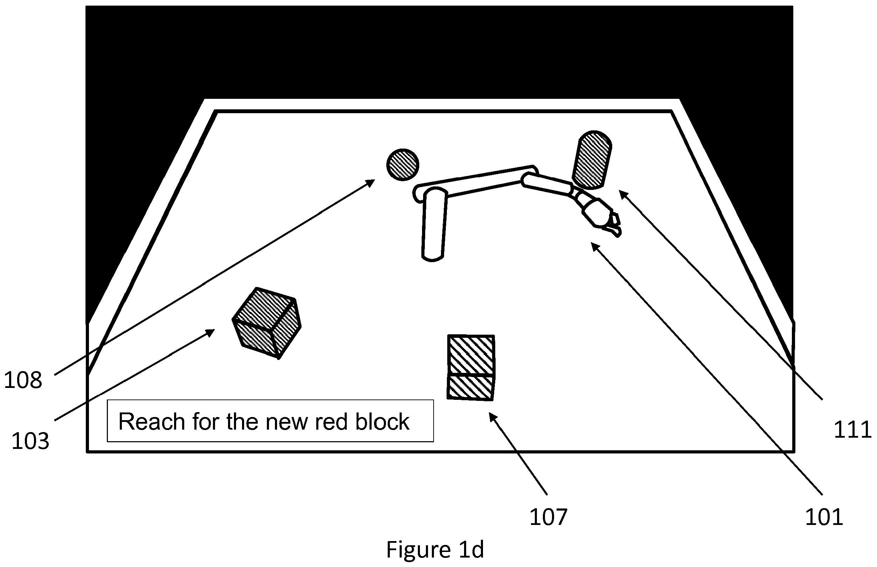

There are a number of objects in the environment, a blue (sparse cross-hatch) sphere 102, a red (dense cross-hatch) cube 103, a green (white) sphere 104, and a red cylinder 105. Figure 1a illustrates the robotic arm 101 reaching for a blue sphere 102, in response to the instruction "reach for blue sphere". In Figure 1b there is a green cube 106, a blue cube 107, the green sphere 104 and the red cylinder 105. The robotic arm 101 has received the instruction "reach for the red block". In Figure 1c there is a red sphere 108, a green cylinder 109, a blue cylinder 110, the blue sphere 102, the red cube 103, the green sphere 104, the red cylinder 105, the green cube 106, and the blue cube 107. The robotic arm 101 has been given the instruction "reach for the green sphere". In Figure 1d a new object, being a red capsule 111, is introduced. There is also the red cube 103, the blue cube 107 and the red sphere 108. The robotic arm 101 has received the instruction "reach for the new red block".

A method according to an implementation will now be described using a simple example. The person skilled in the art will appreciate that other examples, including more complex scenarios may be used and are within the scope of the invention. The example comprises a scenario with a total of five objects, the robotic hand, and four blocks. In the example given the blocks comprise a blue sphere, a red cube, a red sphere and a blue cube. The skilled person will of course appreciate that many more objects with different properties and greater complexity may be used and the invention is not limited to any one collection of objects.

Relevant objects may be expressed in the format:

OR(HAND, AND(PROPERTY1, PROPERTY2) (1)

The relevant objects in equation (1) are the "hand" (the robotic arm) and an object with property1 and property2. A specific example of this might be:

OR(HAND, AND(RED, CUBE)) (2)

which indicates the hand and an object that is both red and cube shaped. The above syntax can be extended to include instructions. For example an instruction to move the hand near to the red cube would be written as:

NEAR(HAND, AND(RED, CUBE)) (3)

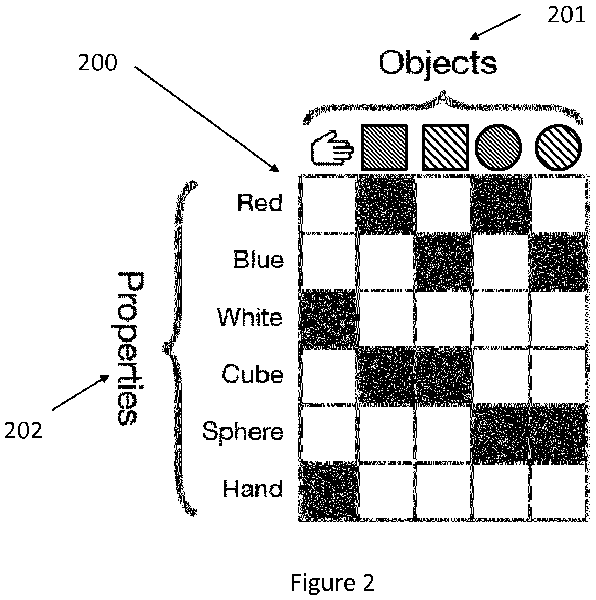

The input to the program is a matrix 200 whose columns are objects and rows are properties. The elements $\Phi_{i,j}$ of this matrix are in {0, 1} (this will be relaxed later) where $\Phi_{i,j} = 1$ indicates that the object j has property i. Figure 2 is a diagram illustrating such a matrix. The matrix 200 provides a mapping between the objects 201 and their properties 202. Hence the "hand" is marked as having the properties "white" and "hand", the red cube is marked with the properties "red" and "cube", etc.

The order of rows and columns of is arbitrary and either can be permuted without changing the assignment of objects to properties. This has the advantage that indices can be assigned to named properties in an arbitrary (but fixed) order. This is the same type of assignment that is done for language models when words in the model vocabulary are assigned to indexes in an embedding matrix $\Phi$, and imposes no loss of generality beyond restricting our programs to a fixed "vocabulary" of properties.

Each row of the matrix 200 corresponds to a particular property that an object may have, and the values in the rows serve as indicator functions over subsets of objects that have the corresponding property. These can be used to select new groups of objects by applying standard set operations, which can be implemented by applying elementwise operations to the rows of $\Phi$.

In the examples given, each object has two properties, a color and a shape, which are together enough to uniquely identify any of the objects. It will be appreciated by the person skilled in the art that the method can be applied to many different properties and the disclosure is not limited to any set or sets of properties.

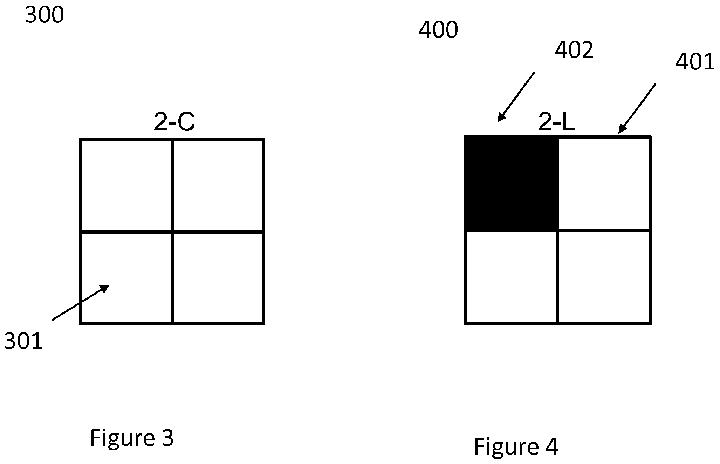

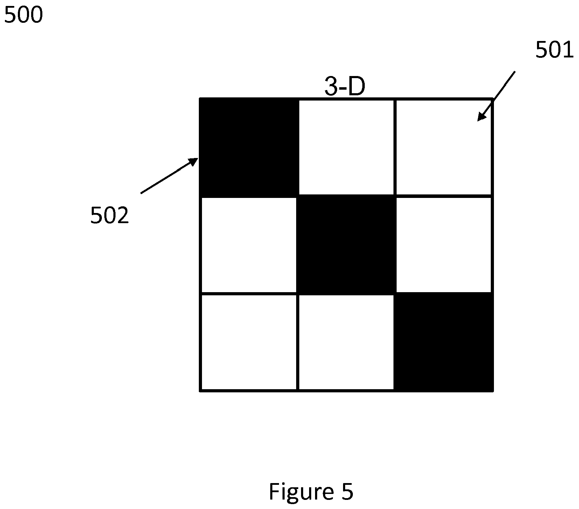

For example, the complexity of the environment can be varied by changing the number colors and shapes that blocks can take. In some example implementations consider $2 \times 2$ (two colors and two shapes) and $3 \times 3$ variants. Figures 3-4 and 5respectively are matrix diagrams illustrating the $2 \times 2$ and $3 \times 3$ matrices respectively. Rows and columns of each matrix correspond to different shapes and colors, indexed by the values they can take. Each cell of the matrix corresponds to a different task. Figure 3 illustrates a matrix 300, for the $2 \times 2$ case, in which each cell coded white 301 corresponds to a pair of properties which are used in training conditions. Figure 4 illustrates another matrix 400 for the $2 \times 2$ case, in which cells are coded white 401 or black 402, where a white cell indicates the corresponding pair of properties are used in training conditions, and a black cell indicates that the corresponding pair of properties are only used to evaluate zero-shot generalization after the agent is trained. Figure 5 illustrates a $3 \times 3$ matrix 500 with the same encoding of white 501 and black 502 as in Figure 4.

The number of blocks that appear on the table in each episode can be controlled. In the non-limiting example illustrated, four blocks are used during training. In the example, when there are more possible blocks than there are positions on the table an episode generator ensures that the reaching task is always achievable (i.e. the agent is never asked to reach for a block that is not present on the table). However, the disclosure is not limited to this condition and the skilled person would see scenarios in which this requirement would not apply.

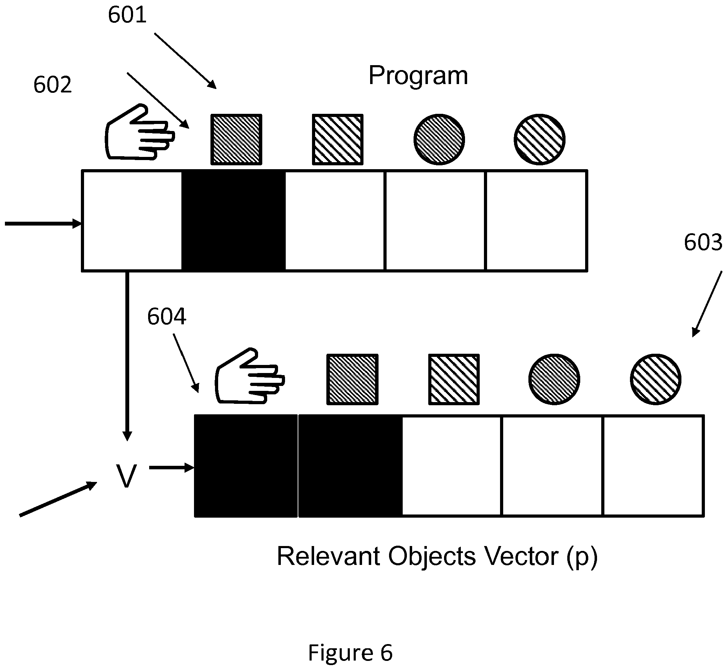

The role of the program in the agent is to allow the network to identify the set of task relevant objects in the environment. For a reaching task there are two relevant objects: the hand of the robot and the target block the arm is supposed to reach for. Objects in the environment are identified by a collection of properties that are referenced by the program. The objects referenced by the program are referred to as relevant objects and their properties are set out in a relevant objects vector. Figure 6 is a diagram illustrating relevant objects vectors. There is illustrated an interim objects vector 601, which identifies a block to be reached (a "red cube") 602, and a relevant objects vector 603 including both the red cube 602 and the hand 604, i.e. all the relevant objects referenced by the program.

The actions of the program according to an implementation will now be explained. In an implementation, the assumption is made that the assignment of properties to objects is crisp (i.e. 0 or1) and known.

The task in this example is to reach for the red cube, and the relevant program is:

NEAR(HAND, AND(RED, CUBE)) (4)

The task is designed to select the hand and the object that is both red and cube shaped.

The input to the program is a matrix $\Phi$ (such as the one illustrated in Figure 2) whose columns are objects and rows are properties. The elements of this matrix are in {0, 1} where i = 1 indicates that the object j has property i.

Each row of corresponds to a particular property that an object may have, and the values in the rows serve as indicator functions over subsets of objects that have the corresponding property. These can be used to select new groups of objects by applying standard set operations, which can be implemented by applying elementwise operations to the rows of $\Phi$.

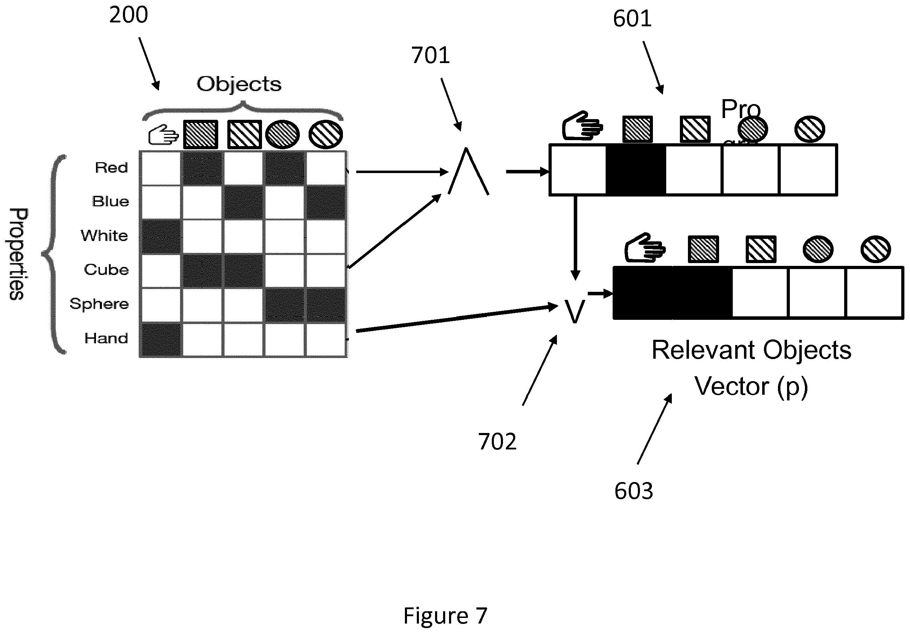

Figure 7 is a diagram illustrating how the program according to an implementation is applied. The interim objects vector 601 represents AND (RED, CUBE). The functions AND and OR in the program (shown as $\wedge$701 and V 702 in Figure 7) correspond to the set operations of intersection and union, respectively. The result of applying the program is a vector whose elements constitute an indicator function over objects. The set corresponding to the indicator function contains both the robot hand and the red cube and excludes the remaining objects. The output is a relevant objects vector 603 and is denoted by *p* (for "presence" in the set of relevant objects). This vector will play a role in the downstream reasoning process of our agents. None of the operations involved in executing the program depends on the number of objects.

The program execution described in the previous implementation makes use of set operations on indicator functions, which are uniquely defined when the sets are crisp. However, this uniqueness is lost if the sets are soft. It is desirable to allow programs to be applied to soft sets so that the assignment of properties to objects can be learned by backprop. This requires not only that the set operations apply to soft sets, but also that they be differentiable. In an implementation the following assignment is chosen:

$$\text{not}(x) = 1 - x \qquad \text{and}(x, y) = xy \qquad \text{or}(x, y) = x + y - xy \qquad (5)$$

It can be verified that these operations are self-consistent (i.e. identities like or(x, y) =not(and(not(x), not(y))) hold), and reduce to standard set operations when x, y $\in$ {0, 1}. This particular assignment is convenient because each operation always gives non-zero derivatives to all arguments. The person skilled in the art would appreciate that other definitions are possible and the disclosure is not limited to any one method.

In previous implementations, the properties are preassigned to the objects. In an implementation the device is further configured to identify properties of objects using one or more property detectors. In this implementation, there is a second matrix, a matrix of features, henceforth referred to as $\Omega$, in addition to the matrix of properties $\Phi$. The detectors operate on $\Omega$, which is similar to $\Phi$, in that the columns of $\Omega$ correspond to objects, but the rows are opaque vectors, populated by whatever information the environment provides about objects. The columns of the $\Omega$ are filled with whatever features the environment provides, such as position, orientation, etc. The features must have enough information to identify the properties in the vocabulary, but this information is entangled with other features in $\Omega$. In contrast, in $\Phi$, the features have been disentangled.

In an implementation, the observations consumed by the agent are collected into the columns of $\Omega$. The matrix $\Omega$ has one column for each object in the environment, where objects include all of the blocks on the table and also the hand of the robot arm. In an implementation, each object is described by its 3d position and 4d orientation, represented in the coordinate frame of the hand. Each block also has a shape and a color which, in an implementation, are represented to the agent using 1-hot vectors.

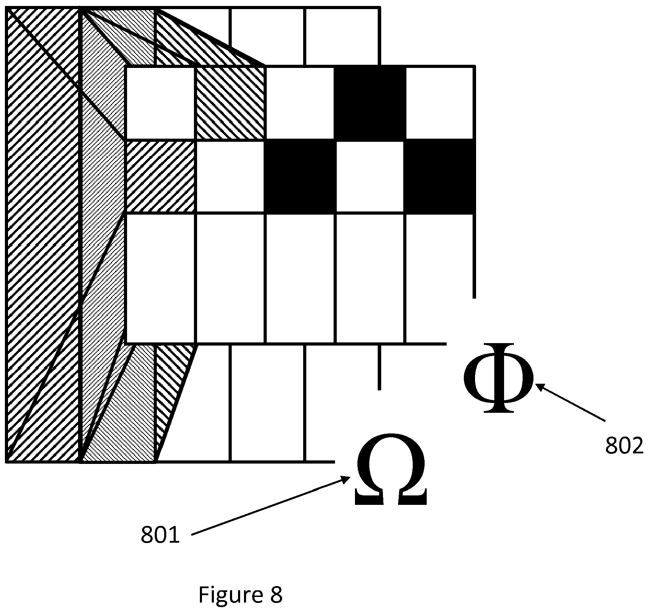

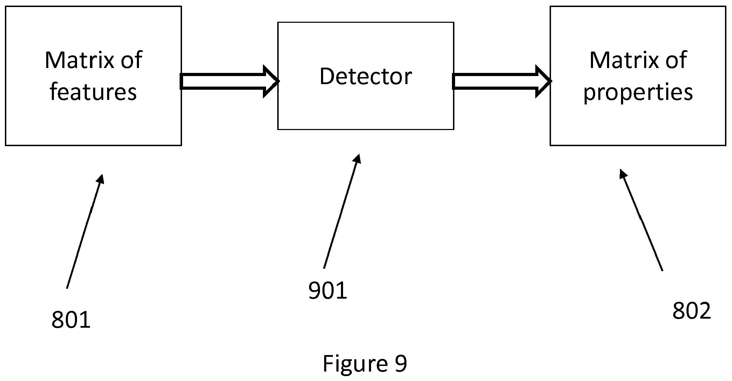

Figure 8 is a diagram which illustrates the relationship between the matrix of features $\Omega$ 801 and the matrix of properties $\Phi$ 802, whereby data is extracted from the former and entered into the latter. Figure 9 is a diagram illustrating the process of populating $\Omega$. The matrix of features $\Omega$ 801 provides data to at least one detector 901, which extracts information about the properties and then populates the matrix of properties $\Phi$ 802.

In an implementation, one detector is used for each property in the vocabulary of the device. Each detector is a small neural network that maps columns $\omega_j$ of $\Omega$ to a value in [0, 1]. The detectors are applied independently to each column of the matrix $\Omega$ and each detector populates a single row of $\Phi$. Groups of detectors corresponding to sets of mutually exclusive properties (e.g. different colors) have their outputs coupled by a softmax function. For example, if the matrix of properties 802 of Figure 8 is populated using the method according to an implementation, each column is the output of two softmax functions, one over colors and one over shapes.

In the above implementation, the detectors are pre-trained to identify a given property. In a further implementation, the agent is configured to learn to identify meaningful properties of objects and to reason about sets of objects formed by combinations of these properties in a completely end to end way.

In a further implementation, the agent is configured to reason over relationships between objects. The agent is configured to receive a matrix $\Omega$, whose rows are features and whose columns are again objects. The agent then applies elementwise operations to the rows of $\Phi$ to create a relevant objects vector p.

In order to allow reasoning over relationships between objects, a message passing scheme is introduced to exchange information between the objects selected by the relevant objects vector.

Using $\omega_i$ and $\omega_j$ to represent columns of $\Omega$, a single round of message passing may be written as

$$\omega_i' = f(\omega_i) + \sum_j \alpha_{ij} r(\omega_i, \omega_j), \qquad (6)$$

where $\omega_i'$ is the resulting transformed features of object $i$. This operation is applied to each column of $\Omega$, and the resulting vectors are aggregated into the columns of a new matrix, referred to hereafter as transformed matrix $\Omega'$. The function $f(\omega_i)$ produces a local transformation of the features of a single object, and $r(\omega_i, \omega_j)$ provides a message from object $j \rightarrow i$. Messages between objects are mediated by edge weights $\alpha_{ij}$, which are described below.

The functions $f$ and $r$ are implemented with small Multi-Layer Perceptrons, MLPs. The edge weights $\alpha_{ij}$ are determined using a modified version of a neighborhood attention operation:

$$c_i = \text{Linear}(\omega_i),$$

$$q_i = \text{Linear}(\omega_i),$$

$$\tilde{\alpha}_{ij} = w^T \tanh(q_i + c_j), \qquad (7)$$

$$\alpha_{ij} = \frac{p_j \exp \tilde{\alpha}_{ij}}{\sum_k p_k \exp \tilde{\alpha}_{ik}},$$

wherein $p$ is the relevant objects vector, with elements that lie in the interval [0, 1]. Here $c_i$ and $q_i$ are vectors derived from $\omega_i$ and $w$ is a learned weight vector. To understand this consider what happens if $p_j = 0$, which means that object $j$ is not a relevant object for the current task. In this case the resulting $\alpha_{ij} = 0$ also, and the effect is that the message from $j \rightarrow i$ in Equation 7 does not contribute to $\omega_i'$. In other words, task-irrelevant objects do not pass messages to task-relevant objects during relational reasoning.

The result of the message passing stage is a features-by-objects matrix $\Omega'$. In order to produce a single result for the full observation, aggregation across objects is implemented and a final readout layer is applied to obtain the result. When aggregating over the objects the features of each object are weighted by the relevant objects vector in order to exclude irrelevant objects. The shape of the readout layer will depend on the role of the network. For example, when implementing an actor network an action is produced, and the result may look like

$$a = \tanh\left(Linear(< \Omega', \boldsymbol{p} >)\right) \qquad (8)$$

where <> denotes a function of a product of $\Omega'$ and $\boldsymbol{p}$ as explained below.

When implementing a critic net the readout is similar, but does not include the final tanh transform.

The observation $\Omega$ is processed by a battery of property detectors to create the property matrix $\Phi$. The program is applied to the rows of this matrix to obtain the relevant objects vector, which is used to gate the message passing operation between columns of $\Omega$. The resulting feature matrix $\Omega'$ is reduced and a final readout layer is applied to produce the network output. In an implementation, in addition to object features the *body features* (that is, parameters describing the robot device) are also included. In an implementation, this is implemented by appending joint positions to each column of $\Omega$. This effectively represents each object in a "body pose relative" way, which seems useful for reasoning about how to apply joint torques to move the hand and the target together. The person skilled in the art will appreciate that there are alternative ways in which body features may be implemented and the disclosure is not limited to any one method.

In an implementation, the agent is configured to reference objects by properties they do not have (e.g. "the cube that is not red"). This works by exclusion. To reach for an object without a property a program is written that expresses this. An example might be the program:

NEAR(HAND, AND(NOT(RED), CUBE)) (9)

This directs the agent to reach for the cube that is not red. The person skilled in the art would appreciate that this could be adapted to any of the properties of an object, such as NOT(any particular color), NOT (any given shape) etc. It is also possible to have combinations such as

NOT (OR(RED, BLUE)), or NOT (OR(RED, CUBE)). (10)

Three logical operations have been specified above: AND, OR and NOT. However, in some implementations, training programs are all of the form:

NEAR(HAND, AND(shape, color)) (11)

These implementations do not make use of the not operation. Nonetheless, agents are still capable of executing programs that contain negations. This is possible by use of De Morgan's laws. De Morgan's laws require that negation interact with AND and OR in a particular way, and the rules of classical logic require that these laws hold.

In an implementation, the agent is configured to reference novel colors and shapes. This works in a similar way to that for negation. This is illustrated in an example, with five colors, of which three, red, blue and green, have previously appeared in the training data. The vocabulary in this example is [RED, GREEN, BLUE, A, B], where A and B are used for colors which have not yet appeared. In this case the concept of "novel color" may be expressed in two ways. The first is an exclusive expression: NOT(OR(RED, BLUE, GREEN)) which says "not any of the colors that have appeared," and the second is an inclusive expression, OR(A, B), which says "any of the colors that have not appeared." In an implementation, a combination of both methods may be used:

OR(NOT(OR(RED, BLUE, GREEN)), OR(A, B)) (12)

In implementations in which there is the assumption that every object has only one color (i.e. the soft membership values for all color sets must sum to 1), this can give good performance.

Using the technique of Equation 12 a program can be written to reach for the block with a new shape and a new color as:

NEAR(HAND, AND(OR(NOT(OR(RED, BLUE, GREEN)), OR(A, B)), OR(NOT(OR(CUBE, SPHERE, CYLINDER)), C))) (13)

Targeting novel colors and shapes is done via the exclusion principle. For example, there can be five color detectors labelled [RED, GREEN, BLUE, A, B], where A and B are never seen at training time. At test time, the set of objects of novel color can be represented by computing OR(AND(NOT(RED), NOT(GREEN), NOT(BLUE)), A, B). Novel shapes can be specified in a similar way.

The person skilled in the art will appreciate that this technique can be used any combinations of properties of objects and in more complex scenarios than that described, for example with more shapes and colors, positions, orientations, objects with multiple color etc.

There are many reinforcement learning techniques, any of which can be used with the programmable agents according to the disclosure. In an implementation, an actor critic approach is used.. In an implementation, a deterministic policy gradient method is used to train the agent. Both the actor and the critic are programmable networks. The actor and critic share the same programmable structure (including the vocabulary of properties), but they do not share weights.

In both the actor and critic the vector $h$ is produced by taking a weighted sum over the columns of $\Omega'$. Using $\omega'_i$ to denote these columns, $h$ can be written as

$$h = \sum_i p_i \omega'_i \qquad (14)$$

The motivation for weighting the columns by $p$ here is the same as for incorporating $p$ into the message passing weights in Equation 6, namely to make $h$ include only information about relevant objects. The role of $p$ is precisely to identify these objects. Reducing over the columns of $\Omega'$ fixes the size of $h$ to be independent of the number of objects.

In an implementation, the architectures of the actor and critic diverge. There are two networks here that do not share weights, so there are in fact two different $h$ vectors to consider. A distinction is made between the activations at $h$ in the actor and critic by using $h_a$ to denote $h$ produced in the actor and $h_c$ to denote $h$ produced in the critic.

In an implementation, the actor produces an action from $h_a$ using a single linear layer, followed by a tanh to bound the range of the actions:

$$a = \tanh(\mathrm{Linear}(\tanh(h_a))) . \qquad (15)$$

In an implementation, the computation in the critic is slightly more complex. Although $h_c$ contains information about the observation, it does not contain any information about the action, which the critic requires. The action is combined with $h_c$ by passing it through a single linear layer which is then added to $h_c$

$$Q(\Omega, a) = \mathrm{Linear}(\tanh(h_c + \mathrm{Linear}(a))) \qquad (16)$$

No final activation function is applied to the critic in order to allow its outputs to take unbounded values.

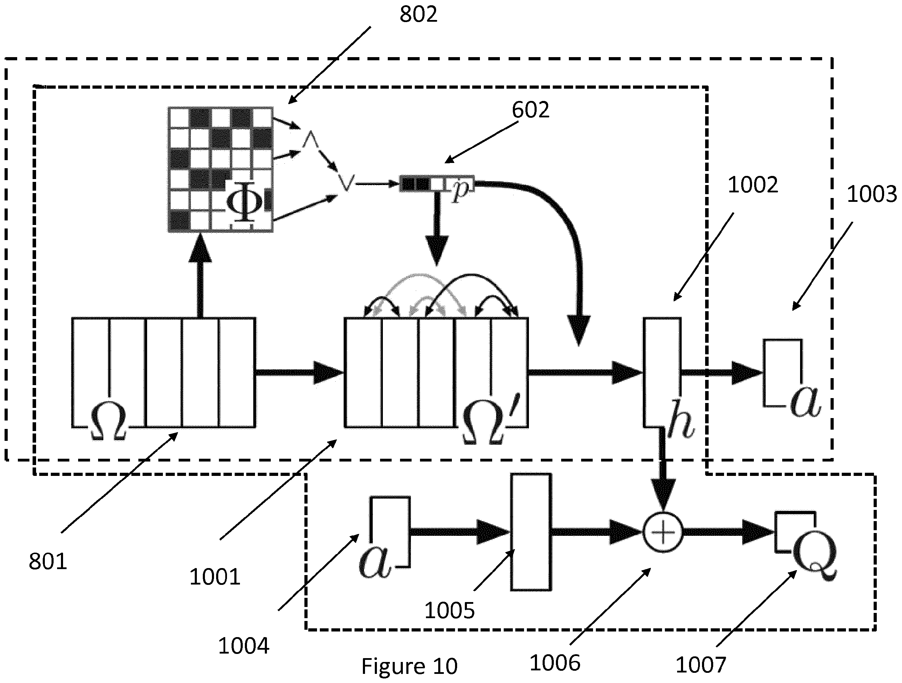

Figure 10 is a diagram illustrating an actor critic method according to an implementation. The matrix of features $\Omega$ 801 is used to populate matrix $\Omega'$ 1001. The properties matrix $\Phi$ 802 is used for the extraction of relevant property vectors 602. The neural network block 1002 comprises two neural networks $h_a$ and $h_c$ which provide for the actor and critic respectively. The actor network generates an action a 1003. The critic combines the results obtained from a previous action a 1004, processed by neural network 1005, and combines 1006 this with the output of $h_c$ to provide a quality indicator 1007.

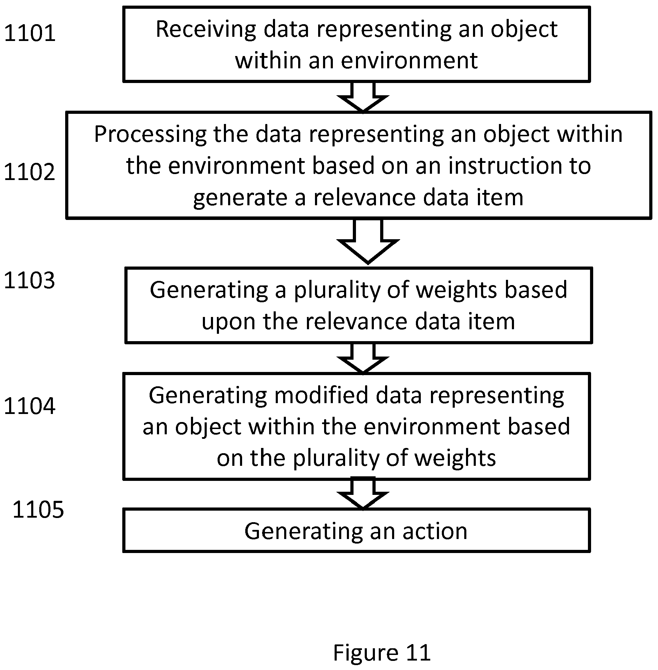

Figure 11 is a flowchart chart illustrating the steps of a method according to an implementation. Data representing an object within an environment is received 1101. The data representing the object is then processed 1102 based on the instruction to generate a relevance data item. A plurality of weights is then generated based on the relevance data item 1103. Modified data representing the object within the environment is then generated 1104 based on the plurality of weights. An action is then generated 1105.

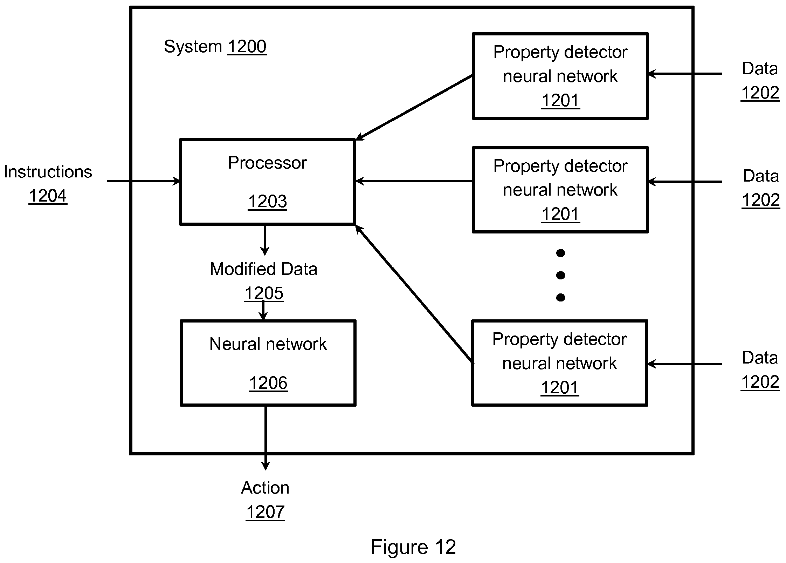

Figure 12 is a schematic diagram illustrating a system according to an implementation. The system 1200 comprises a plurality of detectors 1201, a processor 1203 and a neural network 1206. Each of the detectors 1201 comprises a property detector neural network, each of which is arranged to receive data 1202 representing an object and to generate property data associated with a property of the object. In an implementation, this is used to generate a property matrix as described above. The processor 1203 is arranged to receive an instruction 1204 associated with a task. In an implementation, this instruction may relate a simple task of movement of the robotic arm to reach or move an identifiable object. This may typically be the type of instruction discussed above, such as "reach for the red cube" or "reach for the blue sphere". However, the person skilled in the art will appreciate that other types of instructions may be provided, such as moving objects, identifying more complex objects etc. The invention is not limited to any particular type of instruction. The processor 1203 produces modified data 1205, which is used by the neural network 1206 to generate an action 1207.

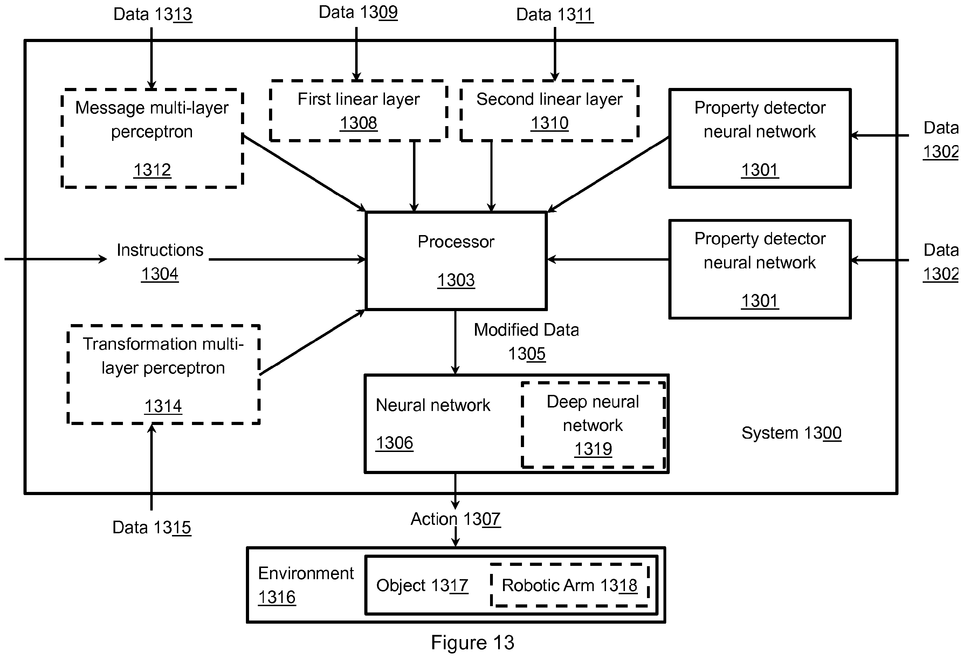

Figure 13 is a schematic diagram illustrating a system 1300 according to another implementation. The system 1300 comprises two property detector neural networks 1301, a processor 1303, a neural network 1306, a first linear layer 1308, a second linear layer 1310, a message multi-layer perceptron 1312, and a transformation multi-layer perceptron 1314. Each of the property detector neural networks 1301 is arranged to receive data 1302 representing an object within an environment and to generate property data associated with a property of the object. The processor 1303 is arranged to receive an instruction 1304 associated with a task, process the output of the property detector neural networks 1301 based upon the instruction to generate a relevance data item. The processor 1303 is further arranged to generate a plurality of weights based upon the relevance data item, and generate modified data 1305 representing a plurality of objects within the environment based upon the plurality of weights. The neural network 1306 is arranged to receive the modified data 1305 and to output an action 1307 associated with the task. The neural network 1306 may comprise a deep neural network 1319. The first linear layer 1308 is arranged to process data 1309 representing a first object within the environment to generate first linear layer output, and the second linear layer 1310 is arranged to process data 1311 representing a second object within the environment to generate second linear layer output. The message multi-layer perceptron 1312 is arranged to receive data 1313 representing first and second objects within the environment, and generate output data representing a relationship between the first and second objects. The modified data 1305 can be generated based upon the output data representing a relationship between the first and second objects. The transformation multi-layer perceptron 1314 is arranged to receive data 1315 representing a first object within the environment, and generate output data representing the first object within the environment. The modified data can be generated based upon the output data representing the first object within the environment. The environment 1316 may comprise an object 1317 associated with performing the action 1307 associated with the task. The object 1317 may comprise a robotic arm 1318.

The processor is further configured to process the output of the property detector neural networks, based on an instruction associated with a task. A relevance data item is generated, and then a plurality of weights based upon the relevance data item is generated.

The agents learn to disentangle distinct properties that are referenced together during training; when trained on tasks that always reference objects through a conjunction of shape and color the agents can generalize at test time to tasks that reference objects through either property in isolation. Completely novel object properties can be referenced through the principle of exclusion (i.e. the object whose color you have not seen before), and the agents are able to successfully complete tasks that reference novel objects in this way. This works even when the agents have never encountered programs involving this type of reference during training. Referring to objects that possess multiple novel properties is also successful, as is referring to objects through combinations of known and unknown properties.

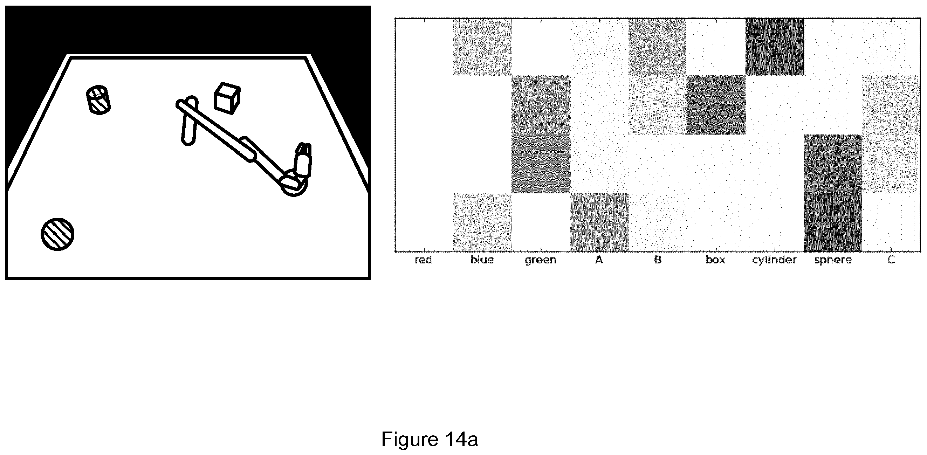

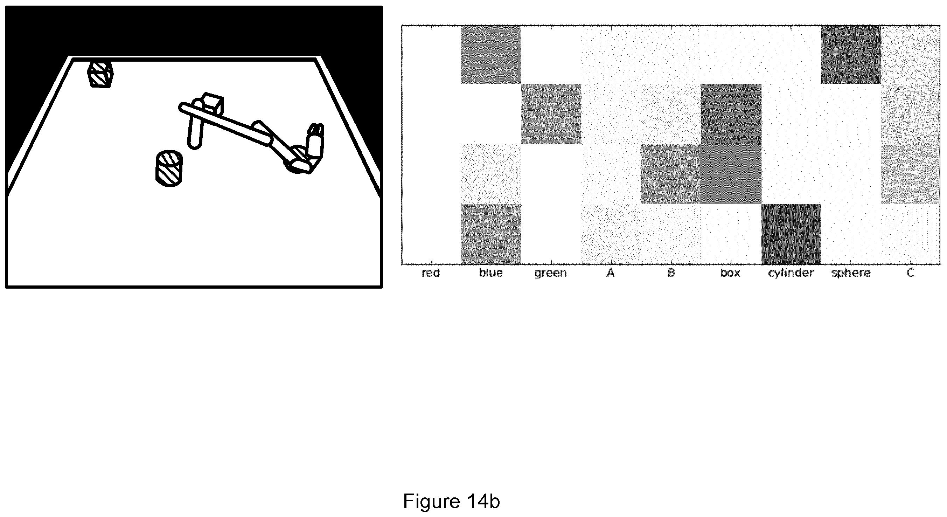

The property identification is not always perfect, as illustrated by Figures 14(a) and 14(b). The left of each figure represents an arrangements of the objects on the table, and the right of each figure represents the corresponding matrix $\Phi$, except that the rows and columns are switched around (i.e. the matrix $\Phi$ has been transposed such that rows represent respective objects and columns represent respective properties). Figure 14(a) shows an episode where the blue sphere (corresponding to the bottom row of the transposed matrix $\Phi$) has been identified as having color 'A' more likely than color 'blue'. Figure 14(b) shows an episode where the blue box (corresponding to the third row of the transposed matrix $\Phi$) has been identified as having color 'B' more likely than color 'blue'.

Targeting novel colors and shapes is done via the exclusion principle. For example, there can be five color detectors labelled [RED, GREEN, BLUE, A, B], where A and B are never seen at training time. At test time, the set of objects of novel color can be represented by computing OR(AND(NOT(RED), NOT(GREEN), NOT(BLUE)), A, B). Novel shapes can be specified in a similar way.

In this specification, for a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Implementations of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Implementations of the subject matter described in this specification can be implemented as one or more computer programs, i.e., one or more modules of computer program instructions encoded on a tangible non transitory program carrier for execution by, or to control the operation of, data processing apparatus. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them. The computer storage medium is not, however, a propagated signal.

The term "data processing apparatus" encompasses all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network.

As used in this specification, an "engine," or "software engine," refers to a software implemented input/output system that provides an output that is different from the input. An engine can be an encoded block of functionality, such as a library, a platform, a software development kit ("SDK"), or an object. Each engine can be implemented on any appropriate type of computing device, e.g., servers, mobile phones, tablet computers, notebook computers, music players, e-book readers, laptop or desktop computers, PDAs, smart phones, or other stationary or portable devices, that includes one or more processors and computer readable media. Additionally, two or more of the engines may be implemented on the same computing device, or on different computing devices.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit). For example, the processes and logic flows can be performed by and apparatus can also be implemented as a graphics processing unit (GPU).

Computers suitable for the execution of a computer program include, by way of example, can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, implementations of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Implementations of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

In certain circumstances, multitasking and parallel processing may be advantageous.

**Claims**

1. A system comprising:

   one or more computers arranged to implement a plurality of property detector neural networks (1201; 1301) and a further neural network, the one or more computers comprising a processor, and each property detector neural network arranged to receive data (1202; 1302) representing an object within a real-world environment (1316) containing a plurality of objects, and to generate respective property data associated with a property of the respective object;
   the processor being arranged to:

   receive an instruction (1204; 1304) indicating a task to be accomplished by a mechanical agent by interacting with the real-world environment, the task being associated with an object having an associated property;
   process the outputs of the plurality of property detector neural networks based upon the instruction to generate a relevance data item, the relevance data item indicating objects within the real-world environment associated with the task;
   generate a plurality of weights based upon the relevance data item; and generate modified data (1205; 1305) representing a plurality of the objects within the real-world environment based upon the plurality of weights; and

   the further neural network being arranged to receive the modified data and to output an action (1003; 1207; 1307) associated with the task, the action being a control input to control the mechanical agent.

2. A system according to claim 1, wherein each weight of the plurality of weights is associated with first and second objects represented within the real-world environment.

3. A system according to claim 1, wherein the system further comprises:

   a computer-implemented first linear layer arranged to process data representing a first object within the real-world environment to generate first linear layer output;
   a computer-implemented second linear layer arranged to process data representing a second object within the real-world environment to generate second linear layer output;
   wherein each weight of the plurality of weights is generated based upon output of the first linear layer output and second linear layer output.

4. A system according to claim 1, further comprising:

   a message multi-layer perceptron;
   wherein the message multi-layer perceptron is arranged to:

   receive data representing first and second objects within the real-world environment; and
   generate output data representing a relationship between the first and second objects;
   wherein the modified data is generated based upon the output data representing a relationship between the first and second objects.

5. A system according to claim 4, wherein generating modified data representing a plurality of objects within the real-world environment based upon the plurality of weights comprises:
applying respective weights of the plurality of weights to the output data representing a relationship between the first and second objects.

6. A system according to claim 1, further comprising:

a transformation multi-layer perceptron;
wherein the transformation multi-layer perceptron is arranged to:

receive data representing a first object within the real-world environment; and
generate output data representing the first object within the real-world environment;
wherein the modified data is generated based upon the output data representing the first object within the real-world environment.

7. A system according to claim 1, wherein the output of the plurality of property detector neural networks indicates, for each object of the plurality of objects within the real-world environment and each respective property of the plurality of properties, a likelihood that the object has the respective property.

8. A system according to claim 1, wherein the instruction associated with a task comprises a goal indicating a target relationship between at least two objects of the plurality of objects.

9. A system according to claim 8, wherein the instruction associated with a task indicates a property associated with at least one object of the at least two objects.

10. A system according to claim 8, wherein the instruction associated with a task indicates a property not associated with at least one object of the at least two objects.

11. A system according to claim 1, wherein the property data associated with a property of the object comprises at least one property selected from the group consisting of an orientation; a position; a color; a shape.

12. A system according to claim 1, wherein the plurality of objects comprises the mechanical agent, the mechanical agent preferably comprising a robotic arm (1318); and preferably wherein at least one property comprises at least one joint position of the robotic arm.

13. A system according to claim 1, wherein at least one neural network of the system comprises a deep neural network.

14. A system according to claim 1, wherein at least one neural network of the system is trained using deterministic policy gradient training.

15. A computer-implemented method for determining an action associated with a task which is to be accomplished by a mechanical agent by interacting with the real-world environment, the method comprising:

receiving (1101) data representing a plurality of objects within a real-world environment;
processing (1102) the data representing objects within the real-world environment using a plurality of property detector neural networks to generate data associated with a respective property of the respective objects;
receiving (1102) an instruction indicating the task, the task being associated with an object and a property;
processing (1102) the output of the plurality of property detector neural networks based upon the instruction to generate a relevance data item, the relevance data item indicating objects within the real-world environment associated with the task;
generating (1103) a plurality of weights based upon the relevance data item; and
generating (1104) modified data representing an object within the real-world environment based upon the plurality of weights;
generating (1105) the action associated with the task, wherein the action associated with the task is generated by a further neural network arranged to receive modified data representing a plurality of objects within the real-world environment; and
outputting the action associated with the task to the mechanical agent, the action being a control input to control the mechanical agent.

**Patentansprüche**

1. System, umfassend:

   einen oder mehrere Computer, die dazu angeordnet sind, eine Vielzahl von neuronalen Eigenschaftsdetektornetzwerken (1201; 1301) und ein weiteres neuronales Netzwerk zu implementieren, wobei der eine oder die mehreren Computer einen Prozessor umfassen, und jedes neuronale Eigenschaftsdetektornetzwerk dazu angeordnet ist, Daten (1202; 1302) zu empfangen, die ein Objekt innerhalb einer realen Umgebung (1316), die eine Vielzahl von Objekten enthält, darstellen, und jeweilige Eigenschaftsdaten, die einer Eigenschaft des jeweiligen Objekts zugeordnet sind, zu erzeugen;
   wobei der Prozessor zu Folgendem angeordnet ist:

   Empfangen einer Anweisung (1204; 1304), die eine Aufgabe anzeigt, die von einem mechanischen Agenten durch Interagieren mit der realen Umgebung zu erledigen ist, wobei die Aufgabe einem Objekt, das eine zugeordnete Eigenschaft aufweist, zugeordnet ist;
   Verarbeiten der Ausgaben der Vielzahl von neuronalen Eigenschaftsdetektornetzwerken basierend auf der Anweisung, ein Relevanzdatenelement zu erzeugen, wobei das Relevanzdatenelement Objekte innerhalb der realen Umgebung, die der Aufgabe zugeordnet sind, anzeigt;
   Erzeugen einer Vielzahl von Gewichtungen basierend auf dem Relevanzdatenelement; und Erzeugen modifizierter Daten (1205; 1305), die eine Vielzahl der Objekte innerhalb der realen Umgebung basierend auf der Vielzahl von Gewichtungen darstellen; und
   wobei das weitere neuronale Netzwerk dazu angeordnet ist, die modifizierten Daten zu empfangen und eine Aktion (1003; 1207; 1307), die der Aufgabe zugeordnet ist, auszugeben, wobei die Aktion eine Steuereingabe zum Steuern des mechanischen Agenten ist.

2. System nach Anspruch 1, wobei jede Gewichtung der Vielzahl von Gewichtungen einem ersten und einem zweiten Objekt, die innerhalb der realen Umgebung dargestellt sind, zugeordnet ist.

3. System nach Anspruch 1, wobei das System ferner Folgendes umfasst:

   eine computerimplementierte erste lineare Schicht, die dazu angeordnet ist, Daten, die ein erstes Objekt innerhalb der realen Umgebung darstellen, zu verarbeiten, um eine erste lineare Schichtausgabe zu erzeugen;
   eine computerimplementierte zweite lineare Schicht, die dazu angeordnet ist, Daten, die ein zweites Objekt innerhalb der realen Umgebung darstellen, zu verarbeiten, um eine zweite lineare Schichtausgabe zu erzeugen;
   wobei jede Gewichtung der Vielzahl von Gewichtungen basierend auf einer Ausgabe der ersten linearen Schichtausgabe und der zweiten linearen Schichtausgabe erzeugt wird.

4. System nach Anspruch 1, ferner umfassend:

   ein mehrschichtiges Nachrichtenperzeptron;
   wobei das mehrschichtige Nachrichtenperzeptron zu Folgendem angeordnet ist:

   Empfangen von Daten, die ein erstes und ein zweites Objekt innerhalb der realen Umgebung darstellen; und
   Erzeugen von Ausgabedaten, die eine Beziehung zwischen dem ersten und dem zweiten Objekt darstellen;
   wobei die modifizierten Daten basierend auf den Ausgabedaten, die eine Beziehung zwischen dem ersten und dem zweiten Objekt darstellen, erzeugt werden.

5. System nach Anspruch 4, wobei das Erzeugen von modifizierten Daten, die eine Vielzahl von Objekten innerhalb der realen Umgebung darstellen, basierend auf der Vielzahl von Gewichtungen Folgendes umfasst:
   Anwenden jeweiliger Gewichtungen der Vielzahl von Gewichtungen auf die Ausgabedaten, die eine Beziehung zwischen dem ersten und dem zweiten Objekt darstellen.

6. System nach Anspruch 1, ferner umfassend:

   ein mehrschichtiges Transformationsperzeptron;
   wobei das mehrschichtige Transformationsperzeptron zu Folgendem angeordnet ist:

   Empfangen von Daten, die ein erstes Objekt innerhalb der realen Umgebung darstellen; und

Erzeugen von Ausgabedaten, die das erste Objekt innerhalb der realen Umgebung darstellen; wobei die modifizierten Daten basierend auf den Ausgabedaten, die das erste Objekt innerhalb der realen Umgebung darstellen, erzeugt werden.

7. System nach Anspruch 1, wobei die Ausgabe der Vielzahl von neuronalen Eigenschaftsdetektornetzwerken für jedes Objekt der Vielzahl von Objekten innerhalb der realen Umgebung und jede jeweilige Eigenschaft der Vielzahl von Eigenschaften eine Wahrscheinlichkeit, dass das Objekt die jeweilige Eigenschaft aufweist, anzeigt.

8. System nach Anspruch 1, wobei die Anweisung, die einer Aufgabe zugeordnet ist, ein Ziel umfasst, das eine Zielbeziehung zwischen mindestens zwei Objekten der Vielzahl von Objekten angibt.

9. System nach Anspruch 8, wobei die Anweisung, die einer Aufgabe zugeordnet ist, eine Eigenschaft, die mindestens einem Objekt der mindestens zwei Objekte zugeordnet ist, angibt.

10. System nach Anspruch 8, wobei die Anweisung, die einer Aufgabe zugeordnet ist, eine Eigenschaft, die nicht mindestens einem Objekt der mindestens zwei Objekte zugeordnet ist, angibt.

11. System nach Anspruch 1, wobei die Eigenschaftsdaten, die einer Eigenschaft des Objekts zugeordnet sind, mindestens eine Eigenschaft, die aus der Gruppe bestehend aus: einer Ausrichtung, einer Position; einer Farbe; einer Form ausgewählt ist, umfassen.

12. System nach Anspruch 1, wobei die Vielzahl von Objekten den mechanischen Agenten umfasst, wobei der mechanische Agent bevorzugt einen Roboterarm (1318) umfasst; und wobei bevorzugt mindestens eine Eigenschaft mindestens eine Gelenkposition des Roboterarms umfasst.

13. System nach Anspruch 1, wobei mindestens ein neuronales Netzwerk des Systems ein tiefes neuronales Netzwerk umfasst.

14. System nach Anspruch 1, wobei mindestens ein neuronales Netzwerk des Systems unter Verwendung eines deterministischen Richtlinien-Gradienten-Trainings trainiert wird.

15. Computerimplementiertes Verfahren zum Bestimmen einer Aktion, die einer Aufgabe, die durch einen mechanischen Agenten durch Interagieren mit der realen Umgebung zu erledigen ist, zugeordnet ist, wobei das Verfahren Folgendes umfasst:

Empfangen (1101) von Daten, die eine Vielzahl von Objekten innerhalb einer realen Umgebung darstellen;
Verarbeiten (1102) der Daten, die Objekte innerhalb der realen Umgebung darstellen, unter Verwendung einer Vielzahl von neuronalen Eigenschaftsdetektornetzwerken, um Daten, die einer jeweiligen Eigenschaft der jeweiligen Objekte zugeordnet sind, zu erzeugen;
Empfangen (1102) einer Anweisung, welche die Aufgabe anzeigt, wobei die Aufgabe einem Objekt und einer Eigenschaft zugeordnet ist;
Verarbeiten (1102) der Ausgabe der Vielzahl von neuronalen Eigenschaftsdetektornetzwerken basierend auf der Anweisung, ein Relevanzdatenelement zu erzeugen, wobei das Relevanzdatenelement Objekte innerhalb der realen Umgebung, die der Aufgabe zugeordnet ist, anzeigt;
Erzeugen (1103) einer Vielzahl von Gewichtungen basierend auf dem Relevanzdatenelement; und
Erzeugen (1104) von modifizierten Daten, die ein Objekt innerhalb der realen Umgebung darstellen, basierend auf der Vielzahl von Gewichtungen;
Erzeugen (1105) der Aktion, die der Aufgabe zugeordnet ist, wobei die Aktion, die der Aufgabe zugeordnet ist, durch ein weiteres neuronales Netzwerk erzeugt wird, das dazu angeordnet ist, modifizierte Daten, die eine Vielzahl von Objekten innerhalb der realen Umgebung darstellen, zu empfangen; und
Ausgeben der Aktion, die der Aufgabe zugeordnet ist, an den mechanischen Agenten, wobei die Aktion eine Steuereingabe zum Steuern des mechanischen Agenten ist.

**Revendications**

1. Système comprenant :

un ou plusieurs ordinateurs agencés pour mettre en oeuvre une pluralité de réseaux neuronaux de détecteurs de propriétés (1201 ; 1301) et un autre réseau neuronal, les un ou plusieurs ordinateurs comprenant un processeur, et chaque réseau neuronal de détecteurs de propriétés étant agencé pour recevoir des données (1202 ; 1302) représentant un objet dans un environnement réel (1316) contenant une pluralité d'objets, et pour générer des données de propriété respectives associées à une propriété de l'objet respectif ;
le processeur étant agencé pour :

recevoir une instruction (1204 ; 1304) indiquant une tâche à accomplir par un agent mécanique par interaction avec l'environnement réel, la tâche étant associée à un objet ayant une propriété associée ;
traiter les sorties de la pluralité de réseaux neuronaux de détecteurs de propriété sur la base de l'instruction de génération d'un élément de données de pertinence, l'élément de données de pertinence indiquant des objets dans l'environnement réel associé à la tâche ;
générer une pluralité de poids sur la base de l'élément de données de pertinence ; et générer des données modifiées (1205 ; 1305) représentant une pluralité des objets dans l'environnement réel sur la base de la pluralité de poids ; et
l'autre réseau neuronal est agencé pour recevoir les données modifiées et pour délivrer une action (1003 ; 1207 ; 1307) associée à la tâche, l'action étant une entrée de commande pour commander l'agent mécanique.

2. Système selon la revendication 1, dans lequel chaque poids de la pluralité de poids est associé à des premier et second objets représentés dans l'environnement réel.

3. Système selon la revendication 1, dans lequel le système comprend également :

une première couche linéaire mise en oeuvre par ordinateur agencée pour traiter des données représentant un premier objet dans l'environnement réel pour générer une sortie de première couche linéaire ;
une seconde couche linéaire mise en oeuvre par ordinateur agencée pour traiter des données représentant un second objet dans l'environnement réel pour générer une sortie de seconde couche linéaire ;
dans lequel chaque poids de la pluralité de poids est généré sur la base de la sortie de la sortie de première couche linéaire et de la sortie de seconde couche linéaire.

4. Système selon la revendication 1, comprenant également :

un perceptron multicouche de message ;
dans lequel le perceptron multicouche de message est agencé pour :

recevoir des données représentant des premier et second objets dans l'environnement réel ; et
générer des données de sortie représentant une relation entre les premier et second objets ;
dans lequel les données modifiées sont générées sur la base des données de sortie représentant une relation entre les premier et second objets.

5. Système selon la revendication 4, dans lequel la génération de données modifiées représentant une pluralité d'objets dans l'environnement réel sur la base de la pluralité de poids comprend :
l'application de poids respectifs de la pluralité de poids aux données de sortie représentant une relation entre les premier et second objets.

6. Système selon la revendication 1, comprenant également :

un perceptron multicouche de transformation ;
dans lequel le perceptron multicouche de transformation est agencé pour :

recevoir des données représentant un premier objet dans l'environnement réel ; et
générer des données de sortie représentant le premier objet dans l'environnement réel ;
dans lequel les données modifiées sont générées sur la base des données de sortie représentant le premier objet dans l'environnement réel.

7. Système selon la revendication 1, dans lequel la sortie de la pluralité de réseaux neuronaux de détecteurs de propriétés indique, pour chaque objet de la pluralité d'objets dans l'environnement réel et chaque propriété respective de la pluralité de propriétés, une probabilité que l'objet ait la propriété respective.

8. Système selon la revendication 1, dans lequel l'instruction associée à une tâche comprend un but indiquant une relation cible entre au moins deux objets de la pluralité d'objets.

9. Système selon la revendication 8, dans lequel l'instruction associée à une tâche indique une propriété associée à au moins un objet des au moins deux objets.

10. Système selon la revendication 8, dans lequel l'instruction associée à une tâche indique une propriété non associée à au moins un objet des au moins deux objets.

11. Système selon la revendication 1, dans lequel les données de propriétés associées à une propriété de l'objet comprennent au moins une propriété choisie dans le groupe constitué : d'une orientation ; d'une position ; d'une couleur ; d'une forme.

12. Système selon la revendication 1, dans lequel la pluralité d'objets comprend l'agent mécanique, l'agent mécanique comprenant de préférence un bras robotisé (1318) ; et de préférence dans lequel au moins une propriété comprend au moins une position articulaire du bras robotisé.

13. Système selon la revendication 1, dans lequel au moins un réseau neuronal du système comprend un réseau neuronal profond.

14. Système selon la revendication 1, dans lequel au moins un réseau neuronal du système est entraîné à l'aide d'un apprentissage déterministe de gradient de politique.

15. Procédé mis en oeuvre par ordinateur pour déterminer une action associée à une tâche qui doit être accomplie par un agent mécanique par interaction avec l'environnement réel, le procédé comprenant :

la réception (1101) de données représentant une pluralité d'objets dans un environnement réel ;
le traitement (1102) des données représentant des objets dans l'environnement réel à l'aide d'une pluralité de réseaux neuronaux de détecteurs de propriétés pour générer des données associées à une propriété respective des objets respectifs ;
la réception (1102) d'une instruction indiquant la tâche, la tâche étant associée à un objet et une propriété ;
le traitement (1102) de la sortie de la pluralité de réseaux neuronaux de détecteurs de propriétés sur la base de l'instruction de génération d'un élément de données de pertinence, l'élément de données de pertinence indiquant des objets dans l'environnement réel associé à la tâche ;
la génération (1103) d'une pluralité de poids sur la base de l'élément de données de pertinence ; et
la génération (1104) de données modifiées représentant un objet dans l'environnement réel sur la base de la pluralité de poids ;
la génération (1105) de l'action associée à la tâche, dans lequel l'action associée à la tâche est générée par un autre réseau neuronal agencé pour recevoir des données modifiées représentant une pluralité d'objets dans l'environnement réel ; et
la délivrance de l'action associée à la tâche à l'agent mécanique, l'action étant une entrée de commande pour commander l'agent mécanique.

Figure 1a

Figure 1b

Reach for the green sphere

102
104
108
107 103
109
105
106
110

Figure 1c

EP 3 610 423 B1

Figure 1d

Figure 2

300

2-C

301

Figure 3

400

402

401

2-L

Figure 4

Figure 5

Figure 6

Figure 7

EP 3 610 423 B1

EP 3 610 423 B1

Ω

Φ

801

802

Figure 8

EP 3 610 423 B1

```
┌──────────────┐        ┌──────────────┐        ┌──────────────┐
│              │        │              │        │              │
│  Matrix of   │  ===>  │   Detector   │  ===>  │  Matrix of   │
│   features   │        │              │        │  properties  │
│              │        │              │        │              │
└──────────────┘        └──────────────┘        └──────────────┘
       ↑                       ↑                        ↑
      801                     901                      802
```

Figure 9

Figure 10

1101 — Receiving data representing an object within an environment

1102 — Processing the data representing an object within the environment based on an instruction to generate a relevance data item

1103 — Generating a plurality of weights based upon the relevance data item

1104 — Generating modified data representing an object within the environment based on the plurality of weights

1105 — Generating an action

Figure 11

Figure 12

Data 13<u>13</u>                Data 13<u>09</u>                Data 13<u>11</u>

```
+---------------------------+   +---------------------+   +---------------------+      +---------------------+
| Message multi-layer       |   | First linear layer  |   | Second linear layer |      | Property detector   |
| perceptron                |   |       1308          |   |       1310          |      | neural network      |
|         1312              |   |                     |   |                     |      |       1301           |
+---------------------------+   +---------------------+   +---------------------+      +---------------------+
```

Data 1302

Instructions
1304

```
              +---------------------+
              |     Processor       |
              |       1303          |
              +---------------------+
```

Property detector
neural network
1301

Data 1302

Transformation multi-layer perceptron
1314

Modified Data
13<u>05</u>

```
+-------------------------------------------+
| Neural network    | Deep neural           |
|                   | network               |
|     1306          |      1319             |
+-------------------------------------------+
```

System 13<u>00</u>

Data 13<u>15</u>

Action 13<u>07</u>

```
+-----------------------------------------------------+
| Environment  | Object 13<u>17</u> | Robotic Arm 13<u>18</u> |
|   1316       |                                      |
+-----------------------------------------------------+
```

Figure 13

EP 3 610 423 B1

Figure 14a

Figure 14b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HAONAN YU et al.** A Deep Compositional Framework for Human-like Language Acquisition in Virtual Environment. *arXiv: 1703.09831,* 13 April 2017

- **BATTAGLIA, PETER W. et al.** Interaction Networks for Learning about Objects, Relations and Physics. *arXiv: 161200222,* 01 December 2016